(19) Europäisches Patentamt
European Patent Office
Office européen des brevets

(11) EP 4 189 161 B1

(12) **EUROPEAN PATENT SPECIFICATION**

(45) Date of publication and mention
of the grant of the patent:
**25.12.2024 Bulletin 2024/52**

(21) Application number: **21754757.9**

(22) Date of filing: **28.07.2021**

(51) International Patent Classification (IPC):
$D21H\ 13/08^{(2006.01)}$    $D04H\ 1/28^{(2012.01)}$
$D04H\ 1/4258^{(2012.01)}$    $D04H\ 1/4391^{(2012.01)}$
$H01M\ 50/429^{(2021.01)}$    $H01M\ 50/44^{(2021.01)}$

(52) Cooperative Patent Classification (CPC):
**D04H 1/43912; D04H 1/28; D04H 1/4258;
D04H 1/498; D04H 1/732; D21H 13/08;
D21H 13/10; D21H 13/36; H01M 50/4295;
H01M 50/44;** Y02E 60/10

(86) International application number:
**PCT/EP2021/071091**

(87) International publication number:
**WO 2022/023394 (03.02.2022 Gazette 2022/05)**

(54) **USE OF LYOCELL FIBRES**

VERWENDUNG VON LYOCELLFASERN

UTILISATION DE FIBRES DE LYOCELL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2020 EP 20188361**

(43) Date of publication of application:
**07.06.2023 Bulletin 2023/23**

(73) Proprietor: **Lenzing Aktiengesellschaft
4860 Lenzing (AT)**

(74) Representative: **Schwarz & Partner Patentanwälte
GmbH
Patentanwälte
Wipplingerstraße 30
1010 Wien (AT)**

(56) References cited:
**EP-A1- 3 385 428**     **US-A- 3 318 990**
**US-A1- 2009 017 385**

• **ANONYMOUS: "Recycling of PET nonwoven fibre
waste", PET:NOLOGY, 1 March 2017
(2017-03-01), XP055840628, Retrieved from the
Internet
<URL:https://www.petnology.com/competence-
online/news/recycling-of-pet-nonwoven-fibre-w
aste.html> [retrieved on 20210914]**
• **DATABASE WPI Week 200017, Derwent World
Patents Index; AN 2000-187465, XP002801432**

EP 4 189 161 B1

**Description**

The present invention relates to the use of lyocell fibres in a non-woven fibre fleece. Especially, the present invention relates to the use of certain specific lyocell fibres in the manufacture of papers for purposes such as a filtration paper or, in particular, a paper to be used in a battery separator.

Prior Art

Batteries, including alkaline (primary and secondary) and lithium ion batteries, include separators comprising a porous layer that may include polymeric fibres. Polymeric film separators are most commonly used, however, separators made from non-polymeric inorganic fibres have also been employed. Such separators serve to prevent an electrical connection between the anode and the cathode of the battery, or a short circuit.

Cellulosic fibres are widely employed in battery separator papers due to their ability to absorb and retain the electrolytes. However, some of these cellulosic fibres (like rayon or mercerized pulp) have a poor fibrillation ability and, therefore, do not allow obtaining battery separators with the desired properties in terms of density, porosity and dimensional stability.

Cellulosic fibres of the lyocell genus are well known for their fibrillation ability and are employed in battery separators. Lyocell fibres are spun from a solution of cellulose in a tertiary amine-oxide.

Thanks to the fine and long fibrils, the separators made with such fibrillated lyocell fibres have a suitable porosity, the ion mobility inside the battery is very good and the efficiency of the battery is high. The fibrils interlace very well during paper making and form a dense structure with low shrinkage and high dimensional stability. Moreover the average size of the pores is small, and this represents a barrier for dendrites.

The use of lyocell fibres in battery separators has been disclosed in EP 0 572 921 A1, US 2007/0014080 A1, US 2010/0310921 and US 2009/0017385 A1. WO 97/37392 discloses a battery separator made from a cellulose film formed from a solution of cellulose in an amine oxide. Further state of the art is provided by US 5,700,700 and DE 198 55 644.

WO 2013/159948 and WO 2014/127828 A1 disclose the use of lyocell fibres with specific properties in a battery separator.

US 3,318,990 discloses the use of viscose hollow flat fibres in lustrous and transparent papers.

The viscose fibres need to be modified with water-swellable polymers in order to make them suitable for this purpose.

In order to achieve the most favourable performance, cellulosic fibres used in papers, especially papers for filtration purposes and battery separator papers, require to be fibrillated prior to the sheet making process. This, so-called refining process, is a very time and energy intensive process. In addition to fibrillation, refining of cellulosic fibres to a high degree of freeness has a detrimental effect of reducing the average length of the fibres being refined. The consequences thereof are lower mechanical properties of the resulting separator sheet.

The fibrillation of lyocell fibres occurs at the surface regions of the fibres. This means that even when lyocell fibres are fibrillated to high freeness levels, central regions of the fibres remain unfibrillated, forming a residual core from each of the individual fibres.

A sheet is formed when at least two (2) layers of fibrillated fibres overlap. This means that the minimum thickness of the sheet is proportional to the thickness of the fibrillated fibres that build it.

A standard lyocell fibre has an essentially round cross section, whereby a round cross section lyocell fibre with a titre of 1.7 dtex has a diameter of approx. 12 $\mu$m in the dry state. After extensive fibrillation, the residual core diameter is on average 10 $\mu$m. Lyocell fibres with reduced diameter may be produced by making suitable adjustments to the fibre spinning conditions. The lyocell fibres may also be fibrillated by refining to high degrees of freeness, e.g. 80 °SR (degree Schopper Riegler). The residual core diameter of the fibres after refining is approximately 2 $\mu$m smaller than the original diameter of the initial lyocell fibres. The smallest hitherto fibre diameter achieved in small scale spinning trials was approximately 8 $\mu$m and the resulting residual core diameter achieved after refining these 8 $\mu$m diameter fibres was approximately 6 $\mu$m. Producing smaller titres (and therefore smaller residual core diameters) is technically and economically challenging.

Further prior art relates to JP 2000 030687 A disclosing a wet-laid nonwoven for use as a battery separator.

Disclosure of the Invention

There is still a desire for non-woven fleeces, especially papers, having sufficient strength even at a very low thickness.

The present invention sets out as its task to provide such improved non-woven fleeces.

This task is solved by the use of a lyocell fibre for the manufacture of a nonwoven fibre fleece according to claim 1.

Preferred embodiments of the invention are set out in the dependent claims.

Furthermore, the object stated above is solved by way of a nonwoven fibre fleece according to claim 6.

Again, preferred embodiments are set out in the dependent claims.

Brief Description of the Drawings

Preferred embodiments of the invention are described in the following with reference to the drawings. Figures 1 to 6 show:

Fig. 1 a schematic drawing depicting the cross section of a lyocell fibre for use in manufacturing a nonwoven fibre fleece with a cross-sectional aspect ratio according to the invention,

Fig. 2 a schematic drawing of the cross section of a nonwoven fibre fleece according to the present invention,

Fig. 3a an SEM micrograph of a nonwoven fibre fleece in top view according to a first embodiment of the invention,

Fig. 3b schematic drawing of the top view in Fig. 3 a with traced contours,

Fig. 4a an SEM micrograph of the nonwoven fibre fleece shown in Fig. 3 in cross-sectional view,

Fig. 4b schematic drawing of the cross-sectional view in Fig. 4a with traced contours,

Fig. 5a an SEM micrograph of a comparative nonwoven fibre fleece in top view from standard round lyocell fibres,

Fig. 5b schematic drawing of the top view in Fig. 5a with traced contours,

Fig. 6a an SEM micrograph of the nonwoven fibre fleece shown in Fig. 5 in cross-sectional view, and

Fig. 6b schematic drawing of the cross-sectional view in Fig. 6a with traced contours.

Detailed Description of the Invention

The invention relates to a lyocell fibre for use in the manufacture of a nonwoven fibre fleece, whereby the lyocell fibre exhibits a cross-sectional aspect ratio of at least 1.8.

The cross-sectional aspect ratio of the fibre is defined as the width to height ratio of a minimum bounding rectangle around the cross section of the fibre. The minimum bounding rectangle is the smallest rectangle circumscribing the perimeter of the fibre cross section. The width of the bounding rectangle thereby is measured along the longer direction of the fibre cross section. In a further preferred embodiment, the lyocell fibre exhibits a cross-sectional aspect ratio from 2 to 10.

It has surprisingly been found that such lyocell fibres with a modified cross section, thus with a cross-sectional aspect ratio as defined above, produced under equivalent process parameters and with the same titre, compared to standard round lyocell fibres, require less energy and time to be refined to an equivalent level. This saves both time and operational costs. Thus, a more efficient manufacturing process may be obtained by using said fibres.

The lyocell fibres with modified cross-sectional aspect ratio retain an unfibrillated solid core after refining, which exhibit an essentially oval cross section. The fibrillated lyocell fibres further comprise thin fibrils protruding from said solid cores.

In preferred embodiments the solid cores of the fibrillated lyocell fibres exhibit an average cross-sectional aspect ratio $k$ as defined further below of at least 1.5.

The fibrils protruding from the solid cores may exhibit a width-distribution from approximately 100 nm to approximately 10 $\mu$m.

Furthermore it has surprisingly been found that when converting such fibrillated fibres to a nonwoven fibre fleece, the fibres were aligned within the formed fibre fleece such that the thinner axis of the fibres was perpendicular to the plane of the sheet. This enables the production of a very thin nonwoven fibre fleece still having sufficient tensile properties, such as strength.

The term "lyocell" fibre, as is well known to the skilled artisan, denotes a man-made cellulosic fibre spun from a solution of non-derivatised cellulose in an organic solvent.

The most common type of lyocell fibres nowadays, and an especially preferred embodiment of the present invention, is a lyocell fibre spun according to the amine-oxide process. It is well understood that an amine oxide process includes at least the steps of: (1) dissolving cellulose in an amine oxide solvent, preferably at elevated temperature, to create a solution; (2) spinning the solution (preferably at about 100°C) and drawing the shaped solution over an air gap; and (3) adding the shaped solution to a spinning bath and precipitating the cellulose.

The amine oxide solvent is most preferably aqueous N-methyl-morpholine-N-oxide (NMMO).

For the purposes of the present invention, the term "nonwoven fibre fleece" denotes any fibre fleece formed by entangling fibres or filaments and bonding them together by means of mechanical, thermal, chemical or hydrogen bonding on a fibre-level. Contrary to that, wovens are formed through a weaving process involving yarns, but are typically not bonded on a fibre-level. The term "nonwoven fibre fleece" includes nonwovens produced by techniques like spunlacing (hydroentanglement), needling or the like. The term "nonwoven fibre fleece" particularly includes papers.

In a preferred embodiment of the present invention, the lyocell fibre is a flat fibre, i.e. has a substantially rectangular cross section.

However, also other lyocell fibres with a modified cross section, thus with a cross section deviating from an essentially round cross section, can be used. Examples for such fibres include multilobal fibres, such as fibres with a "Y" or "X"-shape, or other fibres with non-round cross section, such as fibres with an "8"-shape, provided that the cross-sectional aspect ratio of said fibres fulfils the above provision.

In case of a flat fibre, the lyocell flat fibre may have been produced by spinning a cellulose solution through a die having a rectangular aperture. WO 2010/071906 discloses this way of producing a flat fibre.

Alternatively, the fibre can produced by a process as disclosed in WO 2007/143761 by extruding the solution through a spinneret having several round apertures being located adjacent to each other, so that the filaments extruded through these apertures fuse and form a cross section which, e.g., is essentially rectangular.

The fibre used in the present invention preferably exhibits a titre of from 0.5 dtex to 10 dtex, preferably more than 1 dtex.

It has been found that especially in the case of flat fibres, fibres having a higher titre than a standard lyocell fibre with round cross section, e.g. with a titre of 1.7 dtex, can be fibrillated and formed into a nonwoven fibre fleece, the resulting nonwoven fibre fleece having a thickness lower than that of a sheet formed from said standard lyocell fibre with round cross section. This is because of the surprising discovery that the fibres align themselves horizontally, i.e. with their thinner axis being perpendicular to the plane of the sheet.

As mentioned above, lyocell fibres used according to the invention surprisingly require less energy and time to be refined to an equivalent fibrillation level. This saves both time and operational costs.

The objective of refining is to fibrillate the fibre whilst minimising the side effect of shortening the fibre lengths. Longer refining times/higher refining energy lead to increased shortening of the fibre length, which in turn lead to poorer mechanical properties of the resulting nonwoven fibre fleece. It is therefore desirable to utilise less refining energy and still achieve the desired level of fibrillation.

It was found that a lyocell fibre with a cross-sectional aspect ratio according to the invention has a better fibrillation tendency than a comparable round standard lyocell fibre. Thus, apparently, the residual fibre lengths of the flat fibre are not as compromised (reduced) compared to round fibres during refining to the same degree of freeness. Therefore nonwoven fibre fleeces made solely out of flat fibres show much better mechanical properties than sheets made of a comparable fibrillated round fibre.

The tenacity, the tearing strength and the burst strength of the nonwoven fibre fleeces made out of fibres according to the invention are increased compared to a nonwoven fibre fleece made out of round standard fibres. In some embodiments, the tenacity may be increased by at least 50 %, the tearing strength may be increased by at least 100 % and the burst strength may be increased by at least 130 %.

The present invention furthermore relates to a nonwoven fibre fleece comprising lyocell fibres, with the nonwoven fibre fleece comprising at least two layers of fibrillated lyocell fibres, with the fibillated lyocell fibres having solid cores and fibrils protruding from said cores, the fibres and fibrils being intermingled to form the fibre fleece, embedding the solid cores therein, whereby the solid cores of the fibrillated lyocell fibres have an average cross-sectional aspect ratio $k$ of at least 1.5.

In a further preferred embodiment, the solid cores of the fibrillated lyocell fibres have an average cross-sectional aspect ratio $k$ of at least 1.8, preferably of at least 2.0, more preferably of at least 2.2.

The average cross-sectional aspect ratio $k$ of the solid cores of the fibrillated lyocell fibres is defined as

$$k = b/h \,, \tag{1}$$

where $b$ is the mean visible width of solid cores in microscopic top view of the fibre fleece and $h$ is the mean visible height of solid cores in microscopic cross sectional view of the fibre fleece.

By taking a cross-sectional cut of a fibre fleece, the solid cores of the fibres are cut in different angles, thus, the width of the solid cores (perpendicular to the fibre longitudinal axis) cannot be determined reliably from a cross-sectional view. Hence, the determination of the average cross-sectional aspect ratio $k$ needs to be split into the independent determination of the mean visible width $b$ and the mean visible height $h$ of the solid cores.

The mean visible width $b$ of solid cores may safely be determined by taking a top view of a fibre fleece (e.g. by means of SEM micrographs) and obtaining several width-measurements of visible solid cores perpendicular to the direction of elongation of the fibres and calculating the average value thereof. The measurements are taken at positions with essentially consistent width of the solid cores, i.e. not at the strongly fibrillated regions of the fibrillated fibres.

The mean visible height $h$ of solid cores may on the other hand be determined by taking a cross-sectional view of the fibre fleece (e.g. by means of SEM micrographs). Due to the varying directions of elongation of the solid cores in the fibre fleece, the solid cores are cut in different angles and hence the cross sections of the solid cores may appear altered or even "smeared out". Thus, to obtain reliable and representative measurements of the height of the solid cores, height-measurements are taken of several distinctive, clearly discernible solid cores only and the average value is calculated thereof. Care has to be taken, to not obtain measurements at the strongly fibrillated regions of the fibres.

The average cross-sectional aspect ratio *k* thus represents the ratio between the mean width of the solid cores and the mean height of the solid cores, determined in positions of substantially consistent width and height of the solid cores. This measure in turn correlates to the cross-sectional aspect ratio of the (unfibrillated) lyocell fibres according to the invention, determined from the minimum bounding rectangle circumscribing the perimeter of the lyocell fibre cross section.

Due to the fibrillation of the lyocell fibres in the refining process, the cross-sectional aspect ratio of the solid cores of the fibrillated lyocell fibres may, however, be altered with regard to the cross-sectional aspect ratio of the lyocell fibres before refining.

If the solid cores exhibit an average cross-sectional aspect ratio *k* according to the invention, a nonwoven fibre fleece may be obtained, wherein the fibrillated fibres are aligned so that the thinner axis of the solid cores are perpendicular to the plane of the nonwoven fibre fleece. A very thin nonwoven fibre fleece without compromising its mechanical strength and tensile properties may thus be obtained.

Preferably, the nonwoven fibre fleece may be obtained from processes for manufacturing fibre fleeces using lyocell fibres as defined above.

In yet another embodiment, the nonwoven fibre fleece is a paper.

The thickness of the nonwoven fibre fleece may be preferably 20 $\mu$m or less, more preferably 10 $\mu$m or less.

In a further preferred embodiment, the nonwoven fibre fleece essentially consists of the lyocell fibres.

In another embodiment, the nonwoven fibre fleece may consist of blends including the lyocell fibres. The skilled artisan can thereby include other suitable fibres into the nonwoven fibre fleece, as long as the claimed effect is achieved. Such other fibres may be for example include natural cellulose fibres such as woodpulp, hemp, sisal, flax, abaca, kenaf, Esparto, etc., synthetic polymers such as polyester, polyamide, polyvinylalcohol, polyolefin, aramid, etc., or inorganic fibres, such as glass fibres, etc.

In a further embodiment, the solid cores of the fibrillated lyocell fibres exhibit a mean height of 10 $\mu$m or less, more particularly of 7 $\mu$m or less, preferably of 4.5 $\mu$m or less. Due to the maximum height of the solid cores of the flat fibres, a very thin nonwoven fibre fleece can be achieved, which is suitable as battery seperator.

In an even further embodiment, the solid cores of the fibrillated lyocell fibres exhibit a mean width of at least 15 $\mu$m, more particularly of between 20 and 40 $\mu$m.

For example, if a lyocell flat fibre with a titre of about 2.7 dtex and a cross-sectional aspect ratio of about 4 is used for the manufacture of the fibre fleece, the solid cores of the fibrillated lyocell fibres exhibit mean heights in the range of 5-8 $\mu$m and mean widths in the range of 15-30 $\mu$m.

Where lyocell flat fibres with titres other than 2.7 dtex are used, the mean widths and heights of the solid cores will vary accordingly, depending on the cross-sectional aspect ratio of the lyocell flat fibres according to the invention.

Also disclosed herein is a method for manufacturing a nonwoven fibre fleece comprising lyocell fibres, comprising the steps of

- providing a lyocell fibre having a cross-sectional aspect ratio of at least 1.8, preferably from 2 to 10
- refining the lyocell fibre to form fibrillated lyocell fibres
- forming the nonwoven fibre fleece by entangling at least the fibrillated lyocell fibres and bonding them together on a fibre-level.

In a further aspect of the invention, the fibrillated lyocell fibres after refining comprise solid cores and fibrils protruding from said cores. After refining, the solid cores of the fibrillated lyocell fibres have an average cross-sectional aspect ratio *k* of at least 1.5

In an even further aspect of the invention, bonding of the fibrillated lyocell fibres on a fibre-level involves intermingling of the fibres and fibrils to form the fibre fleece, embedding the solid cores therein.

For all aspects of the method for manufacturing a nonwoven fibre fleece, the discussion of preferred embodiments described above and below apply equally.

In the following, preferred embodiments of the invention are described with reference to the figures.

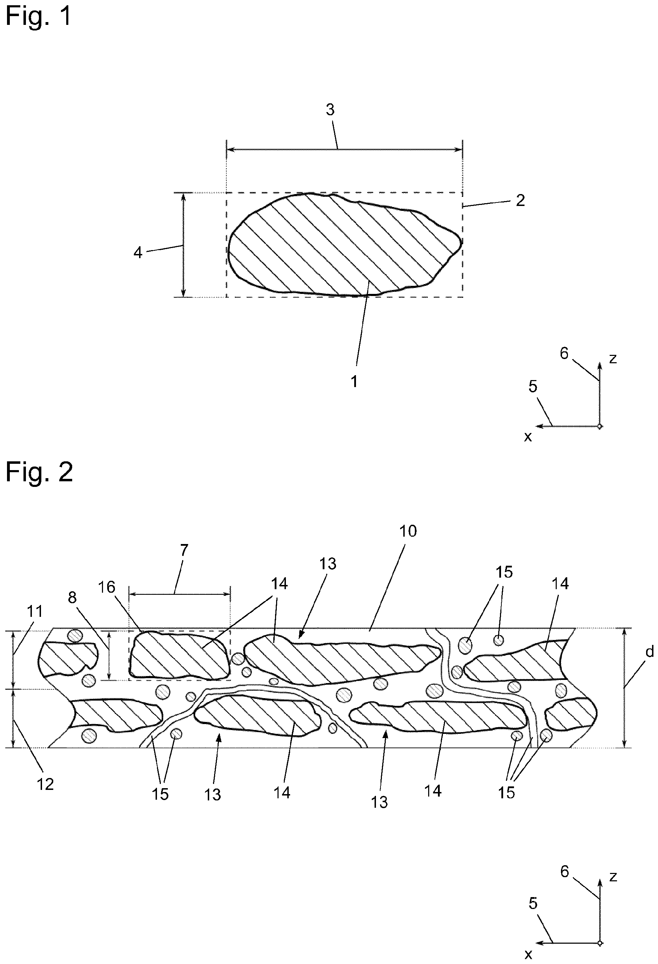

Fig. 1 depicts a schematic drawing of a lyocell fibre 1 for use in manufacturing a nonwoven fibre fleece. The lyocell fibre 1 exhibits an essentially non-round shape and can be circumscribed by a minimum bounding rectangle 2, which represents the smallest rectangle circumscribing the perimeter of the fibre cross section.

The cross-sectional aspect ratio of the fibre 1 can be obtained by dividing the width 3 of the minimum bounding rectangle 2 by the height 4 of the minimum bounding rectangle 2. The width 3 of the fibre 1 is measured along the longer direction 5 of the fibre cross section, while the height 4 of the fibre 1 is measured along the short direction 6 of the fibre cross section. For fibre 1 schematically depicted in Fig. 1, the cross-sectional aspect ratio amounts to 2.26.

For the sake of simplicity, it is assumed that the fibre 1 extends along the y-axis, while the long direction 5 of the fibre cross section coincides with the x-axis and the short direction 6 of the fibre cross section coincides with the z-axis.

Due to the modified (flat) cross section, the fibre 1 requires much less energy and time to be refined to an equivalent (freeness) level than standard round fibres. Thus, a more cost-efficient manufacturing of nonwoven fibre fleeces may be obtained.

Such nonwoven fibre fleece 10 is schematically depicted in Fig. 2. The nonwoven fibre fleece 10 comprises layers 11, 12 consisting of fibrillated lyocell fibres 13. The fibrillated lyocell fibres 13 thereby consist of solid cores 14 and fibrils 15 protruding from said solid cores 14.

According to the simplified schematic drawing in Fig. 2, the fibres 13 are mainly oriented, i.e. extend, along the y-axis, while the nonwoven fibre fleece 10 extends in the x/y-plane. However, in other embodiments, the fibrillated lyocell fibres 13 may be oriented along any direction in the x/y-plane, thus, overlapping randomly.

The layers 11, 12 and thus the whole nonwoven fibre fleece 10 are/is formed through the intermingled fibrils 15, whereby the solid cores 14 are embedded in the dense network of intermingled fibrils 15 forming the fibre fleece 10.

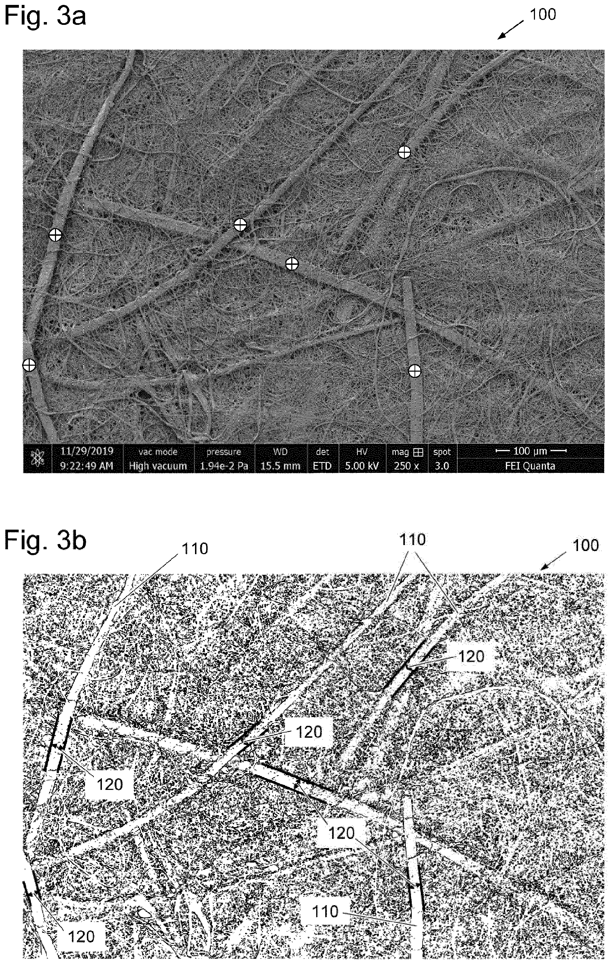

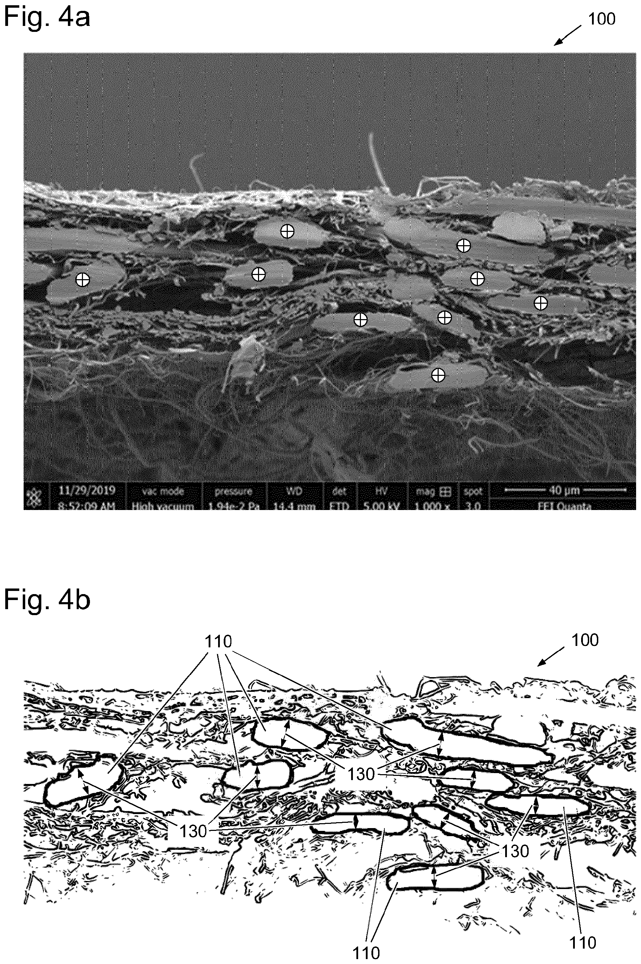

The average cross-sectional aspect ratio $k$ of the nonwoven fibres within fleece 10, defined through formula (1) as the ratio between mean visible width $b$ and the mean height $h$ of the solid cores 14, thereby amounts to at least 1.5. The solid cores 14 may be equally circumscribed by a minimum bounding rectangle 16, which represents the cross-sectional aspect ratio $k$. The visible width 7 can preferably be determined from a top view of the fibre fleece 10 and measurements should be taken at different positions of different solid cores 14 to calculate the mean visible width $b$ thereof. The determination of the visible widths 120 of solid cores 110 is demonstrated in Figs. 3a and 3b for a fibre fleece 100 according to example 1 as described in the examples section below. It is less preferable to determine the widths 7 from a cross-sectional view as schematically depicted in Fig. 2, as such cross-sectional view may over-estimate the widths 7 due to non-perpendicular cuts of the fibres 13. The heights 8 of the solid cores 14 on the other hand can be determined from a cross-sectional view of the fibre fleece 10, whereby the mean height $h$ should be calculated of measurements from several solid cores 14. Such determination of heights 130 of solid cores 110 from a cross-sectional view is demonstrated in Figs. 4a and 4b for the fibre fleece 100 according to example 1.

It is preferable to determine the mean visible width $b$ and the mean height $h$ from taking width 7 and height 8 measurements of at least 5 (five) solid cores 14, more preferable of at least 8 (eight) solid cores 14, respectively. The top view for determining the widths 7 of the solid cores 14 preferably covers a surface area of at least 0.2 mm$^2$, more preferably of at least 0.4 mm$^2$, of the fibre fleece 10. The cross-sectional view for determining the heights 8 of the solid cores 14 preferably covers a distance along the cross-section of at least 150 $\mu$m, more preferably of at least 200 $\mu$m, of the fibre fleece 10.

In a preferred embodiment, the average cross-sectional aspect ratio $k$ of the nonwoven fibre fleece amounts to at least 2.0.

The fibres 13 predominantly align with their short direction of the cross section along the z-axis 6, thus, the vast majority of the fibres 13 lie essentially flat in the x/y-plane. The nonwoven fibre fleece 10 thus has a thickness d lower than that of a nonwoven fibre fleece formed from standard lyocell fibres which have a round cross section. A much thinner fibre fleece 10 may thereby be obtained.

Other embodiments of the present invention, which are not depicted in the figures, may be executed within the scope of the claims. The figures and embodiments presented above do not limit the scope of protection.

Examples

In the following, the advantages according to the invention are demonstrated using inventive and comparative examples. It is noted, however, that the examples presented below are only illustrative and do not limit the scope of the invention.

Thereby, the lyocell fibres with a cross-sectional aspect ratio according to the invention have been produced by the production method as described in the following.

*Fibre production*

A cellulose pulp was mixed with an amine oxide/water solvent to produce a lyocell spinning dope. Under vacuum water was evaporated until dissolution of the pulp occurs. After dissolution, the pulp concentration in the dope was 13%. The resulting spinning dope was filtered and transported to a spinning pump.

The dope was extruded by a spinning pump through a spinneret with modified extrusion orifices at 115 °C and at a rate of 0.05 g/min per hole in order to produce the cross-sectional modified fibres. The fibres were extruded from the spinneret into an air gap of approx. 30 mm height. In said air gap, the fibres were then conditioned with a cross draught at ~ 20 °C, having 8.6 g $H_2O$/kg dry air and a linear velocity of 4.2 m/s.

Finally, the fibres were coagulated in a spin bath containing a 25% amine oxide solution and then transported to further finishing steps via rollers. Thereby, the fibres were produced at a speed of ~ 30 m/min to achieve the desired titre of 2.7 dtex. At suitable intervals the produced fibre cable was cut and washed in demineralised water to remove all traces of amine oxide on the fibre and obtain tows thereof.

The tows were produced accordingly over two days of trials, labelled and stored in plastic bags to be handed over for the application of soft finish.

For applying the soft finish, the tow was removed from its plastic bag and the remaining water pressed off using a Foulard at 5 bar. The soft finish was prepared and the tow immersed in an aqueous finish solution, such that a finish application level of 0.2 % (weight on fibre) was achieved. The finished tow was then dried for 48h in a drying cabinet at 65 °C, after which it was handed over for cutting.

For cutting, the dried and finished tow was cut using a leaf guillotine into 5 mm lengths. The cut cross-sectional modified fibres were stored in clear plastic bags and handed over to refining.

*Refining*

Within refining, the cut, finished and dried cross-sectional modified fibres were refined in a single disc refiner having a plate distance of 0.35 mm and a concentration of 0.6%, in order to fibrillate the fibres. Thereby, the fibres were refined to SR 80° freeness. The dry content after refining and dewatering amounted to approx. 20%. Finally, 500 g of the refined fibre were stored in a plastic bag and were kept refrigerated at 4 °C until producing the nonwoven fibre fleeces.

*Nonwoven fibre fleece production*

For the production of the nonwoven fibre fleeces according to the invention, 100% of refined cross-sectional modified fibres, obtained according to the method described above, were used. The dry content of the fibres was measured to be 18.74% before production. After determining the dry content, the amount of fibres needed for the production of a 30 gsm nonwoven fibre fleece was determined and weighed. The weighed fibres were dispersed in a mixer with 1 l of water at 3000 rpm for 45 s. The resulting suspension was then transferred to a disperser where the suspension was further diluted with 2 1 of water and sparged for 10 s with gas. Immediately after sparging the water was drained off so that a nonwoven fibre fleece was formed on top of a filter. A foil of approx. 1 mm thickness was placed on the resulting fibre fleece to create a filter, fleece and foil stack, which was then dried in a vacuum at 92 °C for 10 min. Thereafter, the foil was removed and the fibre fleece taken off of the filter. The fibre fleece was stored in a transparent sheath until further analysis.

*Measurement methods*

For obtaining SEM (scanning electron microscopy) micrographs, an approx. 1 cm$^2$ sized sample was cut out of the middle of the nonwoven fibre fleece manufactured according to the method described above. The cut sample was sprayed with Au for 120 s. For measurements, a FEI Quanta 450 scanning electron microscope was operated at 5 kV with the following settings: Spot 3, HV, EDT, WD10.

Breaking force and elongantion of samples were measured according to DIN EN ISO 1924-2 of 2009. Prior to measurements, samples of 50 mm × 100 mm were stamped out of the middle of the nonwoven fibre fleece and conditioned for 24 h at 23 °C and 50% humidity. The measurements were taken with a ZWICK ROELL Z2.5 material tester, using the following settings: load cell: 200 N, clamp gap: 80 mm, 20 mm/min traverse speed. Measurements were obtained as average values out of 10 samples.

Tearing strength was measured according to NWSP 100.2.R1 (15). Samples of 75 mm × 150 mm were stamped out of the middle of the nonwoven fibre fleece and conditioned for 24 h at 23 °C and 50% humidity. Measurements were again conducted with a ZWICK ROELL Z2.5 material tester, using the following settings: load cell: 200 N, clamp gap: 25 mm, 100 mm/min traverse speed, stopped when 40 mm traverse length was reached. Measurements were obtained as average values out of 5 samples.

Burst strength was measured according to WSP 110.5(05). Thereby, samples of 100 mm × 100 mm were stamped out of the middle of the nonwoven fibre fleece and conditioned for 24 h at 23 °C and 50% humidity. The sample was fixed on the bottom of a ZWICK ROELL Z2.5 material tester, and an opposite ball was moved to the paper surface until a minimum force of 0.25 N was measured. Then, the ball was moved slightly back until a force of 0 N was measured. The ball stamp then moved with 300 mm/min through the sample. Measurements were obtained as average values out of 5 samples.

Results and Discussion

Nonwoven fibre fleece (paper) sheets were manufactured on small scale comprising flat cross-sectional lyocell fibres according to the production method described above. Microscopic examination by SEM showed, that the fibres were aligned within the sheet such that the direction of their thinner cross-sectional axis was perpendicular to the plane of the sheet, thus aligned along the z-axis as schematically depicted in Fig. 2.

The flat cross-sectional lyocell fibres retained an unfibrillated core after refining, which exhibited an essentially non-round cross section. The widths of the residual cores of fibrillated flat cross-sectional lyocell fibres were measured and their thickness along the thinner axis (z-axis) was determined. Fibres initially spun with an average linear density (titre) of approximately 2.7 dtex and a cross-sectional aspect ratio of about 3.6 exhibited z-axis thicknesses of approximately 7 to 7.7 $\mu$m. After refining to 80°SR, the z-axis thicknesses of the residual cores were reduced and ranged between approximately 3 and 7 $\mu$m. When used to form paper sheets, the minimum attainable sheet thickness is proportional to the z-axis thickness of the flat cross-sectional fibres.

It therefore follows, that despite its high titre, the fibrillated flat fibre can still be used to produce a suitably thin separator paper. Depending on spinnerets employed and process parameters used, varying geometries, as well as smaller titres can be produced. These would in turn further decrease the residual thickness and enable the production of even thinner sheets. The limiting factor is expected then to be the desired mechanical properties of the produced sheet, which in turn are improved when using flat fibres instead of standard round fibres.

Due to their improved mechanical properties, flat fibres can be used to produce a remarkably stable but thin sheet with a thickness of less than 10 $\mu$m.

*Example 1*

An exemplary nonwoven fibre fleece 100 according to the invention (example 1) was produced according to the production method described above, using 2.7 dtex lyocell fibres with an average cross-sectional aspect ratio of 3.57, a mean width of 26.21 $\mu$m and a mean height of 7.34 $\mu$m. The fibre widths and heigths were investigated by means of cross-sectional SEM micrographs of several randomly selected samples. Among these samples, no individual (unfibrillated) fibre with a cross-sectional aspect ratio of less than 3 was found.

In Figs. 3a and 4a SEM micrographs of the manufactured nonwoven fibre fleece 100 of example 1 are shown. Fig. 3a depicts a top view and Fig. 4a a cross-sectional view of the fibre fleece 100. Figs. 3b and 4b show traced contours of the SEM micrographs depicted in Figs. 3a and 4a, respectively.

In the top view of Fig. 3a, several solid cores 110 of the fibre fleece 100 can be discerned. As depicted in Fig. 3b, a number of distinctive sections of said solid cores 110, which exhibit a substantially consistent width and are not situated at the strongly fibrillated regions of the fibres, were selected and visible widths 120 were determined thereof. The selected sections of solid cores 110 are marked in Fig. 3a by crosshairs. The width-measuremens of the six selected sections are recited in Table 1.

Also in the cross-sectional SEM micrograph shown in Fig. 4a, a number of solid cores 110, embedded in a network of fibrills, can be discerned. As schematically shown in Fig. 4b, four distinctive solid cores 110 were selected for the determination of the visible heights 130 of the solid cores. Thereby, only clearly discernible solid cores 110 which were cut at an angle close to 90° and which show no signs of strong fibrillation, were selected. The selected solid cores 110 are again marked in Fig. 4a by crosshairs. The height-measurements of said four selected solid cores 110 are listed in Table 2.

Table 1: Measurements of widths (120) of selected solid cores (110) in example 1.

| Measurements | 1 | 2 | 3 | 4 | 5 | 6 |
|---|---|---|---|---|---|---|
| Width (120) of solid cores (110) [$\mu$m] | 15.15 | 16.36 | 17.57 | 16.96 | 12.12 | 15.15 |

Table 2: Measurements of heights (130) of selected solid cores (110) in example 1.

| Measurements | 1 | 2 | 3 | 4 | 5 | 6 | 7 | 8 | 9 |
|---|---|---|---|---|---|---|---|---|---|
| Height (130) of solid cores (110) [$\mu$m] | 10.19 | 6.94 | 9.26 | 5.56 | 5.74 | 5.37 | 7.22 | 6.20 | 5.37 |

Calculating the average values of determined widths (120) and heights (130) according to Tables 1 and 2, the inventive nonwoven fibre fleece 100 of example 1 exhibits a mean width $b$ of solid cores of 15.55 $\mu$m and a mean height $h$ of solid cores of 6.87 $\mu$m. Hence, the average cross-sectional aspect ratio $k$ of the solid cores amounts to 2.26.

In other inventive examples according to the description above, which have not been depicted in the figures, the average cross-sectional aspect ratio k was determined to be 2.24, 1.92 and 2.04, respectively.

*Comparative Example 2*

A comparative example of a nonwoven fibre fleece 200 was produced from standard round lyocell fibres with a titre of 2.7 dtex, The fleece was produced according to the production method described above. The round lyocell fibres had an average cross-sectional aspect ratio of 1 and a mean diameter of 15.1 μm.

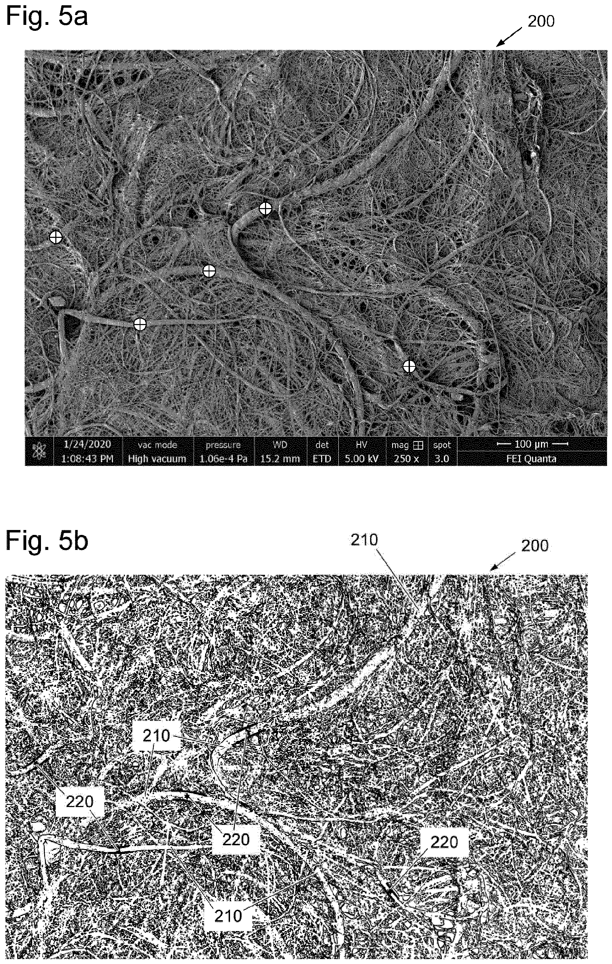

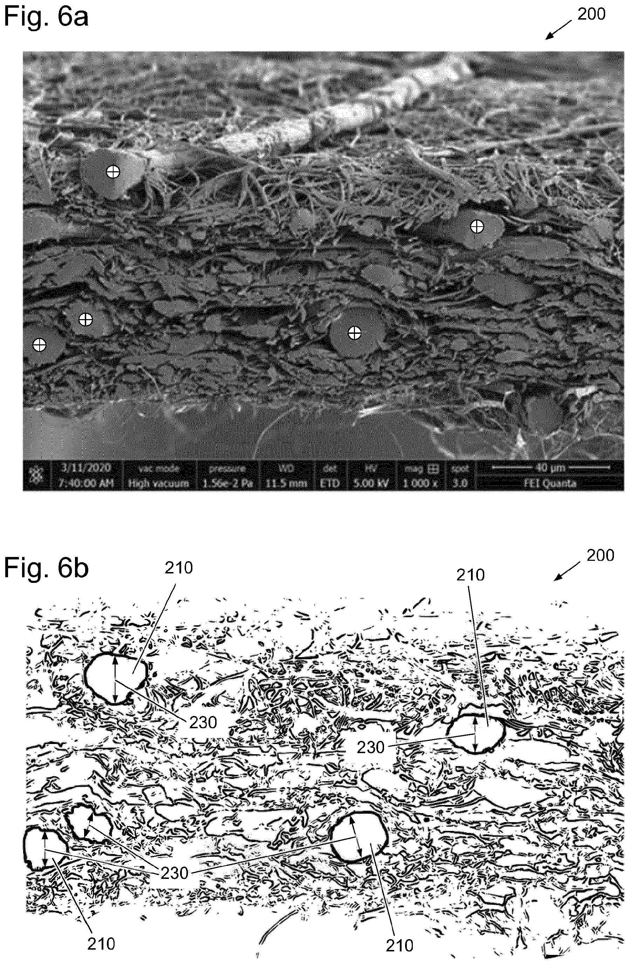

In Figs. 5 and 6 SEM micrographs of said comparative example 2 are shown. Fig. 5a again depicts a top view and Fig. 6a displays the cross-sectional view of the fibre fleece 200. Figs. 5b and 6b again show traced contours of the SEM micrographs depicted in Figs. 5a and 6a, respectively.

From the top view in Fig. 5a, several solid cores 210 can be identified in the fibre fleece 200. From said solid cores 210, only those may be selected for determining the average visible width 220, which show at least sections of substantially consistent width with no signs of strong fibrillation. Care has to be taken to not take into consideration fibrils which are protruding from a solid core. As depicted in Fig. 5b, four distinctive sections of said solid cores 210 were selected and visible widths 220 were determined thereof. The width-measuremens obtained in this way are summarised in Table 3.

From the cross-sectional SEM micrograph shown in Fig. 6a, again a number of solid cores 210 can be discerned. Fig. 6b depicts the traced contours of the SEM micrograph in Fig. 6a and emphasises five distinctive solid cores 210, wich were selected for the determination of the visible heights 230. Again, care should be taken when selecting the solid cores 210 for examination that only clearly discernible solid cores 210 which were cut at angles close to 90° and which show no signs of strong fibrillation, were selected. The height-measurements of the five selected solid cores are listed in Table 4.

Table 3: Measurements of widths (220) of selected solid cores (210) in comp. example 2.

| Measurements | 1 | 2 | 3 | 4 | 5 |
|---|---|---|---|---|---|
| Width (220) of solid cores (210) [μm] | 13.51 | 9.45 | 13.51 | 8.11 | 8.11 |

Table 4: Measurements of heights (230) of selected solid cores (210) in comp. example 2.

| Measurements | 1 | 2 | 3 | 4 | 5 |
|---|---|---|---|---|---|
| Height (230) of solid cores (210) [μm] | 11.25 | 9.82 | 16.34 | 15.18 | 11.25 |

Calculating the average values of determined widths (220) and heights (230) according to Tables 3 and 4, the nonwoven fibre fleece 200 of comparative example 2 with standard round lyocell fibres exhibits a mean width $b$ of solid cores of 10.54 μm and a mean height $h$ of solid cores of 12.77 μm. Hence, the average cross-sectional aspect ratio $k$ of the solid cores (210) amounts to 0.83.

In other comparative examples with standard round lyocell fibres, which have not been depicted in the figures, the average cross-sectional aspect ratio $k$ was determined to be 0.91, 1.04 and 1.31, respectively.

Table 5 (below) summarizes the parameters and mechanical properties of the nonwoven fibre fleece of example 1, as well as the improvement of said properties compared to the nonwoven fibre fleece of comparative example 2 made from standard round lyocell fibres.

*Discussion*

Due to refining, the mean width $b$ and height $h$ of the solid cores were reduced with respect to the (unrefined) fibre dimensions for both the flat (inventive) and round (comparative) lyocell fibres from examples 1 and 2. Also the average cross-sectional aspect ratio $k$ of the solid cores of the flat lyocell fibre is reduced to 2.27 with respect to the cross-sectional aspect ratio of the unrefined flat lyocell fibre of 3.57. This reduction will, however, vary depending on the refining process and its parameters and may even vary within a single batch. In other examples (not shown), the cross-sectional aspect ratio has been observed to stay constant or even increase slightly. Such a change in the cross-sectional aspect ratio is expected and is uncritical as long as the average cross-sectional aspect ratio $k$ of the solid cores lies within the ranges stipulated by the claims.

As can be seen from Table 5, by using the cross-sectionally modified flat lyocell fibres for manufacturing a nonwoven fibre fleece, the energy input for refining the fibres may be reduced by 67,5 %, while at the same time the tensile properties are remarkably improved with respect to standard round lyocell fibres.

Table 5: parameters and properties of example 1 and comparative example 2

| Example | Example 1 | Comparative example 2 | Improvment over Comparative example 2 |
|---|---|---|---|
| **Properties of the fibres prior to refining** | | | |
| Titre [dtex] | 2.7 | 2.7 | |
| Fibre type | lyocell (flat) | lyocell (round) | |
| Mean fibre width [$\mu$m] | 26.21 | 15.1 | |
| Mean fibre height [$\mu$m] | 7.34 | 15.1 | |
| Average cross-sectional aspect ratio of the fibres | 3.57 | 1 | |
| Energy input for refining [kWh] | 11.2 | 34.4 | - 67.5 % |
| | | | |
| **Properties of the manufactured fibre fleece** | | | |
| Example | Example 1 | Comparative example 2 | Improvment over Comparative example 2 |
| Basis weight [g/m$^2$] | 34 | 28 | |
| Mean visible width *b* of solid cores [$\mu$m] | 15.55 | 10.54 | |
| Mean visible height *h* of solid cores [$\mu$m] | 6.87 | 12.77 | |
| Average cross-sectional aspect ratio *k* | 2.27 | 0.83 | |
| Thickness of the fibre fleece [$\mu$m] | 110 | 110 | |
| Tensile strength [N/50mm] | 35.8 | 23.4 | + 52.9 % |
| Tearing strength [N/75mm] | 4.55 | 2.23 | +103.7 % |
| Burst strength [N] | 46.8 | 19.9 | + 135.2 % |

**Claims**

1. Use of a lyocell fibre for the manufacture of a nonwoven fibre fleece (10, 100), **characterized in that** the fibre (1) has a cross-sectional aspect ratio of at least 1.8, preferably from 2 to 10, wherein the cross-sectional aspect ratio is defined as the width to height ratio of a minimum bounding rectangle around the cross section of the fibre.

2. Use according to claim 1, **characterized in that** the fibre (1) is a flat cross section fibre.

3. Use according to claim 1, **characterized in that** the fibre (1) is a cross-sectionally modified fibre with a non-round cross section.

4. Use according to any of claims 1 to 3, **characterized in that** fibre (1) exhibits a titre of from 0.5 dtex to 10 dtex, preferably at least 1 dtex.

5. Use according to any of claims 1 to 4, **characterized in that** the nonwoven fibre fleece (10, 100) is a paper.

6. Nonwoven fibre fleece comprising at least two layers (11, 12) of fibrillated lyocell fibres (13), with the fibrillated lyocell fibres (13) having solid cores (14, 110) and fibrils (15) protruding from said cores (14), the fibres and fibrils (15) being intermingled to form the fibre fleece (10), embedding the solid cores (14) therein, whereby the solid cores (14, 110) of the fibrillated lyocell fibres (13) have an average cross-sectional aspect ratio *k* of at least 1.5, as measured according to the specification, wherein the average cross-sectional aspect ratio *k* of the solid cores of the fibrillated lyocell fibres is defined as

$$k = b/h \, , \qquad (1)$$

where *b* is the mean visible width of solid cores in microscopic top view of the fibre fleece and *h* is the mean visible height of solid cores in microscopic cross sectional view of the fibre fleece.

7. Nonwoven fibre fleece according to claim 6, **characterized in that** the solid cores (14, 110) of the fibrillated lyocell fibres (13) have an average cross-sectional aspect ratio *k* of at least 1.8, more preferably of at least 2.0.

8. Nonwoven fibre fleece according to claim 6 or 7, **characterized in that** the nonwoven fibre fleece (10, 100) is a paper.

9. Nonwoven fibre fleece according to any of claims 6 to 8, **characterized in that** the nonwoven fibre fleece (10, 100) exhibits a thickness d of 20 $\mu$m or less, preferably 10 $\mu$m or less.

10. Nonwoven fibre fleece according to any of claims 6 to 9, **characterized in that** the nonwoven fibre fleece (10, 100) comprises at least 20 wt.-% lyocell fibres (13) in the dry mass.

11. Nonwoven fibre fleece according to any of claims 6 to 10, **characterized in that** the nonwoven fibre fleece (10, 100) essentially consists of the lyocell fibres (13).

12. Nonwoven fibre fleece according to any of claims 6 to 10, **characterized in that** the nonwoven fibre fleece (10, 100) consists of a fibre blend comprising the lyocell fibres (13) and other fibres, with the other fibres being selected from the group consisting of natural cellulose fibres, synthetic polymer fibres and inorganic fibres.

13. Nonwoven fibre fleece according to any of claims 6 to 12, **characterized in that** the solid cores (14, 110) have a mean height of 10 $\mu$m or less, more particularly of 7 $\mu$m or less, preferably of 4.5 $\mu$m or less.

14. Nonwoven fibre fleece obtainable by a process for manufacturing a fibre fleece using lyocell fibres according to any of claims 1 to 5.

15. Battery separator paper, comprising a nonwoven fibre fleece (10) according to any of claims 6 to 14.

**Patentansprüche**

1. Verwendung einer Lyocellfaser zur Herstellung eines nichtgewebtem Faservlieses (10, 100), **dadurch gekennzeichnet, dass** die Faser (1) ein Querschnittsseitenverhältnis von mindestens 1,8, vorzugsweise von 2 bis 10, aufweist, wobei das Querschnittsseitenverhältnis definiert ist als das Verhältnis von Breite zu Höhe eines minimalen begrenzenden Rechtecks um den Querschnitt der Faser .

2. Verwendung nach Anspruch 1, **dadurch gekennzeichnet, dass** die Faser (1) eine Faser mit flachem Querschnitt ist.

3. Verwendung nach Anspruch 1, **dadurch gekennzeichnet, dass** die Faser (1) eine im Querschnitt modifizierte Faser mit einem unrunden Querschnitt ist.

4. Verwendung nach einem der Ansprüche 1 bis 3, **dadurch gekennzeichnet, dass** die Faser (1) einen Titer von 0,5 dtex bis 10 dtex, vorzugsweise mindestens 1 dtex, aufweist.

5. Verwendung nach einem der Ansprüche 1 bis 4, **dadurch gekennzeichnet, dass** das nichtgewebte Faservlies (10, 100) ein Papier ist.

6. Nichtgewebtes Faservlies aus mindestens zwei Lagen (11, 12) fibrillierter Lyocellfasern (13), wobei die fibrillierten Lyocellfasern (13) feste Kerne (14, 110) aufweisen und von diesen Kernen (14) Fibrillen (15) abstehen, wobei die Fasern und Fibrillen (15) unter Einbettung der festen Kerne (14) zu dem Faservlies (10) vermischt sind, wobei die festen Kerne (14, 110) der fibrillierten Lyocellfasern (13) ein mittleres Querschnittsseitenverhältnis $k$ von mindestens 1.5 aufweisen, gemessen gemäß der Spezifikation, wobei das durchschnittliche Querschnittsseitenverhältnis $k$ der festen Kerne der fibrillierten Lyocellfasern definiert ist als

$$k = b/h, \qquad (1)$$

wobei $b$ die mittlere sichtbare Breite der festen Kerne in der mikroskopischen Draufsicht des Faservlieses und $h$ die mittlere sichtbare Höhe der festen Kerne in der mikroskopischen Querschnittsansicht des Faservlieses ist.

7. Nichtgewebtes Faservlies nach Anspruch 6, **dadurch gekennzeichnet, dass** die festen Kerne (14, 110) der fibrillierten Lyocellfasern (13) ein mittleres Querschnittsseitenverhältnis $k$ von mindestens 1,8, bevorzugter von mindestens 2,0 aufweisen.

8. Nichtgewebtes Faservlies nach Anspruch 6 oder 7, **dadurch gekennzeichnet, dass** das nichtgewebte Faservlies (10, 100) ein Papier ist.

9. Nichtgewebtes Faservlies nach einem der Ansprüche 6 bis 8, **dadurch gekennzeichnet, dass** das nichtgewebte Faservlies (10, 100) eine Dicke d von 20 $\mu$m oder weniger, vorzugsweise 10 $\mu$m oder weniger, aufweist.

10. Nichtgewebtes Faservlies nach einem der Ansprüche 6 bis 9, **dadurch gekennzeichnet, dass** das nichtgewebte Faservlies (10, 100) mindestens 20 Gew.-% Lyocellfasern (13) in der Trockenmasse enthält.

11. Nichtgewebtes Faservlies nach einem der Ansprüche 6 bis 10, **dadurch gekennzeichnet, dass** das nichtgewebte Faservlies (10, 100) im Wesentlichen aus den Lyocellfasern (13) besteht.

12. Nichtgewebtes Faservlies nach einem der Ansprüche 6 bis 10, **dadurch gekennzeichnet, dass** das nichtgewebte Faservlies (10, 100) aus einer Fasermischung aus den Lyocellfasern (13) und anderen Fasern besteht, wobei die anderen Fasern aus der Gruppe der natürlichen Cellulosefasern, synthetischen Polymerfasern und anorganischen Fasern ausgewählt sind.

13. Nichtgewebtes Faservlies nach einem der Ansprüche 6 bis 12, **dadurch gekennzeichnet, dass** die festen Kerne (14, 110) eine mittlere Höhe von 10 $\mu$m oder weniger, insbesondere von 7 $\mu$m oder weniger, vorzugsweise von 4,5 $\mu$m oder weniger aufweisen.

14. Nichtgewebtes Faservlies, erhältlich durch ein Verfahren zur Herstellung eines Faservlieses unter Verwendung von Lyocellfasern nach einem der Ansprüche 1 bis 5.

15. Batterieseparatorpapier, bestehend aus einem nichtgewebten Faservlies (10) nach einem der Ansprüche 6 bis 14.

**Revendications**

1. Utilisation d'une fibre de lyocell pour la fabrication d'un molleton de fibres non tissées (10, 100), **caractérisée en ce que** la fibre (1) présente un rapport d'aspect de section transversale d'au moins 1,8, de préférence de 2 à 10, dans lequel le rapport d'aspect de section transversale est défini comme le rapport de largeur à hauteur d'un rectangle de délimitation minimum autour de la section transversale de la fibre.

2. Utilisation selon la revendication 1, **caractérisée en ce que** la fibre (1) est une fibre à section transversale plate.

3. Utilisation selon la revendication 1, **caractérisée en ce que** la fibre (1) est une fibre à section transversale modifiée avec une section transversale non ronde.

4. Utilisation selon l'une quelconque des revendications 1 à 3, **caractérisée en ce que** la fibre (1) présente un titre de 0,5 dtex à 10 dtex, de préférence d'au moins 1 dtex.

5. Utilisation selon l'une quelconque des revendications 1 à 4, **caractérisée en ce que** le molleton de fibres non tissées (10, 100) est un papier.

6. Molleton de fibres non tissées comprenant au moins deux couches (11, 12) de fibres de lyocell fibrillées (13), les fibres de lyocell fibrillées (13) ayant des noyaux solides (14, 110) et des fibrilles (15) faisant saillie à partir desdits noyaux (14), les fibres et les fibrilles (15) étant entremêlées pour former le molleton de fibres (10), en y incorporant les noyaux solides (14), de sorte que les noyaux solides (14, 110) des fibres de lyocell fibrillées (13) ont un rapport d'aspect de section transversale moyen *k* d'au moins 1,5, tel que mesuré selon la description, dans lequel le rapport d'aspect de section transversale moyen *k* des noyaux solides des fibres de lyocell fibrillées est défini comme suit

$$k = b/h, \qquad (1)$$

où *b* est la largeur moyenne visible de noyaux solides dans la vue de dessus en microscopie du molleton de fibres et *h* est la hauteur moyenne visible de noyaux solides dans la vue en section transversale en microscopie du molleton de fibres.

7. Molleton de fibres non tissées selon la revendication 6, **caractérisé en ce que** les noyaux solides (14, 110) des fibres de lyocell fibrillées (13) présentent un rapport d'aspect de section transversale moyen *k* d'au moins 1,8, de préférence d'au moins 2,0.

8. Molleton de fibres non tissées selon la revendication 6 ou 7, **caractérisé en ce que** le molleton de fibres non tissées (10, 100) est un papier.

9. Molleton de fibres non tissées selon l'une quelconque des revendications 6 à 8, **caractérisé en ce que** le molleton de fibres non tissées (10, 100) présente une épaisseur de 20 $\mu$m ou moins, de préférence de 10 $\mu$m ou moins.

10. Molleton de fibres non tissées selon l'une quelconque des revendications 6 à 9, **caractérisé en ce que** le molleton de fibres non tissées (10, 100) comprend au moins 20 % en poids de fibres de lyocell (13) dans la masse sèche.

11. Molleton de fibres non tissées selon l'une quelconque des revendications 6 à 10, **caractérisé en ce que** le molleton de fibres non tissées (10, 100) est constitué essentiellement des fibres de lyocell (13).

12. Molleton de fibres non tissées selon l'une quelconque des revendications 6 à 10, **caractérisé en ce que** le molleton de fibres non tissées (10, 100) est constitué d'un mélange de fibres comprenant les fibres de lyocell (13) et d'autres fibres, les autres fibres étant choisies dans le groupe constitué de fibres de cellulose naturelle, de fibres de polymère synthétique et de fibres inorganiques.

13. Molleton de fibres non tissées selon l'une quelconque des revendications 6 à 12, **caractérisé en ce que** les noyaux solides (14, 110) présentent une hauteur moyenne de 10 $\mu$m ou moins, plus particulièrement de 7 $\mu$m ou moins, de préférence de 4,5 $\mu$m ou moins.

14. Molleton de fibres non tissées pouvant être obtenu par un procédé de fabrication d'un molleton de fibres utilisant des fibres de lyocell selon l'une quelconque des revendications 1 à 5.

15. Papier de séparation de batterie, comprenant un molleton de fibres non tissées (10) selon l'une quelconque des revendications 6 à 14.

# Fig. 1

# Fig. 2

Fig. 3a

Fig. 3b

## Fig. 4a

100

## Fig. 4b

100

110

130

130

130

110

110

Fig. 5a

Fig. 5b

## Fig. 6a

200

| | 3/11/2020 | vac mode | pressure | WD | det | HV | mag ⊞ | spot | ⊢— 40 μm —⊣ |
| | 7:40:00 AM | High vacuum | 1.56e-2 Pa | 11.5 mm | ETD | 5.00 kV | 1 000 x | 3.0 | FEI Quanta |

## Fig. 6b

210          210          200

230          230

230          210          210

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0572921 A1
- US 20070014080 A1
- US 20100310921 A
- US 20090017385 A1
- WO 9737392 A
- US 5700700 A
- DE 19855644

- WO 2013159948 A
- WO 2014127828 A1
- US 3318990 A
- JP 2000030687 A
- WO 2010071906 A
- WO 2007143761 A